# EUROPEAN PATENT APPLICATION

(11) **EP 3 361 433 A1**
(43) Date of publication of application: **15.08.2018**
(21) Application number: 17305163.2
(22) Date of filing: 14.02.2017
(51) Int. Cl.: G06Q 20/06, G06Q 20/38

(54) **SYSTEM AND METHOD FOR INTERACTING DEVICES FROM DIFFERENT ISLANDS OF TRUST**

(71) Applicant: Nokia Technologies Oy, 02610 Espoo (FI)
(72) Inventor: SIGNORINI, Mattéo, 91620 Nozay (FR); WAISBARD, Erez, 44643 Kfar-Saba (IL); DI PIETRO, Roberto, 91620 Nozay (FR)
(74) Representative: Loyer & Abello

(57) **Abstract**

A system and method of interacting a first device (12) in a first Island of Trust (10) belonging to a first organization (A), such Island of Trust comprising at least a first backend (11), with a second device (22) in a second Island of Trust (20) belonging to a second organization (B), such Island of Trust comprising at least a second backend (21). First and second backends are connected to a cloud (17), and may read/write a payment blockchain (15) and an obligation blockchain (16).

The combined specific obligation blockchain (16) with standard payment blockchain (15) allows devices to commit to the ToUs for their respective organizations in a tamper evident distributed manner.

## Description

### Field of the invention

The invention relates to the technical field of systems and methods for interacting devices from different islands of trust using blockchain technology.

### Background

The Internet of Things (IoT) has brought on a considerable number and a wide range of connected and smart devices from different manufacturers on the market. In the true spirit of loT, these devices would be able to seamlessly and securely communicate/cooperate with each other.

The trust model underlying the e-commerce paradigm relies on Public Key Infrastructures (PKI). In turn, PKI relies on common roots of trust.

PKI however is not suited for the loT world, owing to heterogeneity of device manufacturers, vendors, providers and customers. Having a single root of trust is not feasible.

Trust in the loT framework is a well-known problem and large industry consortiums like the Open Connectivity Foundation already tried to come up with solutions. However, the standard approach usually adopted is based on promoting ad-hoc and proprietary platforms as the ones on which loT applications should be built, thus creating closed ecosystems.

Common existing solutions thus either (i) require everybody to use the same platform, hence creating closed ecosystems and requiring an agreement signature with the platform owner, or (ii) establish new roots of trust (such as certification authorities) and ask to all the members to sign mutual and bilateral agreements.

In practice, what happens is that companies, communities and organizations create their own roots of trust allowing seamless secure communication inside the organization, but not with others (with whom communication is more sporadic). This leads to the juxtaposition of islands of trust, a set of complex systems, where each system/island enjoys a self-defined trust model that has little or no interaction with the trust model of other systems/islands.

And for two islands to establish a trust relationship, requires the establishment in advance of an explicit trust agreement between the two which is usually "close", "complex", and not "distributed".

### Summary

The invention provides for a system and method for interacting devices from different islands of trust in a way that significantly reduces the commercial barriers for establishing trust, and removes the technical need to agree in advance on a common root of trust.

More particularly, what is provided is a method of interacting a first device in a first Island of Trust belonging to a first organization, such Island of Trust comprising at least a first backend, with a second device in a second Island of Trust belonging to a second organization, such Island of Trust comprising at least a second backend, wherein the first and second backends are connected to a cloud, and may read/write a payment blockchain and an obligation blockchain, such method comprising the steps of:
- the second backend signing and uploading in the cloud ToUs for services provided by the second organization;
- the first backend downloading said ToUs from the cloud;
- the first backend selecting terms among ToUs of services required by the first organization, creating OTs for said selected terms, and signing and sending to the first device said OTs and said selected terms ;
- the first device sending to the second device a request for interaction ;
- the second device sending to the first device said ToUs for services provided by the second organization;
- the first device doing a comparison of said selected terms received from the first backend with said ToUs received from the second device, and if positive as regard the selected terms, signing and sending to the second device said OTs received from the first backend;
- the second device signing and sending the OTs received from the first device to the second backend; and
- the second backend writing the OTs received from the second device into the obligation chain.

In one embodiment, the method further includes the step of the first device sending to the second device the selected terms received from the first backend.

In another embodiment, the method further includes the step of the second device immediately letting the first device access services provided by the second organization and corresponding to the terms selected by the first organization.

In yet another embodiment, the method further includes the step of the first organization paying for services accessed by the first device, by the first backend:
- verifying all signatures made according to the method; and, if verified
- writing the payment in the payment blockchain.

Is also provided according to the invention a device in a first Island of Trust belonging to a first organization, such Island of Trust comprising at least a first backend, configured to, when in proximity with a second device in a second Island of Trust belonging to a second organization, such Island of Trust comprising at least a second backend, wherein the first and second backends are connected to a cloud, and may read/write a payment blockchain and an obligation blockchain:
- receive from the first backend:
   - selected terms for services required by the first organization, among ToUs for services provided by the second organization; and
   - OTs for said selected terms ;
- send to the second device a request for
- receive from the second device said ToUs for services provided by the second organization; and
- do a comparison of said selected terms received from the first backend with said ToUs received from the second device, and if positive as regard the selected terms, sign and send to the second device said OTs received from the first backend.

Is also provided according to the invention a device in a first Island of Trust belonging to a first organization, such Island of Trust comprising at least a first backend, configured to, when in proximity with a second device in a second Island of Trust belonging to a second organization, such Island of Trust comprising at least a second backend, wherein the first and second backends are connected to a cloud, and may read/write a payment blockchain and an obligation blockchain:
- receive a request for interaction from the second device;
- send to the second device said ToUs for services provided by the first organization;
- receive OTs for selected among said ToUs from the the second device; and
- sign and send the OTs received from the second device to the first backend.

### Brief description of the drawings

These and other aspects of the invention will be apparent from and elucidated with reference to the embodiments described hereinafter, by way of example, with reference to the drawings.
Figure 1 is a representation of two Islands of Trust for two organizations, and of the interaction between two devices respectively belonging to each of the organizations.
Figure 2 is a representation of the steps toward one organization using and paying for, services provided by the other organization, through interaction of respective devices.
Figure 3 is a representation of a standard payment blockchain (prior art).
Figure 4 is a representation of a specific obligation blockchain according to the invention.
Figure 5 is a representation of links between a specific obligation blockchain and a standard payment blockchain.

### Detailed description of the embodiments

In the following description:
- « Island of Trust » means the infrastructure, comprising at least a backend, to which is connected at least one loT device, that has a self-defined well-established trust mechanism in place to allow seamless and secure interaction between devices, and between devices and the backend, regardless of the physical location of the backend or the devices ;
- « backend » means a server that is able to connect to the Cloud, and read/write blockchains ;
- « sign », « signed » or « signing » refers to digital signature based on PKI.

The following will assume, without limitation to the scope of the invention which extends beyond this implementation mode, that that two organizations, A and B, with each their Island of Trust, want to interact as a user (Organization A) who wishes to consume services provided by a service provider (Organization B), without signing beforehand a commercial agreement that would define in advance the extent and conditions of the use. It is to be noted that « Organization » as used here is not to be understood in the sense of legal entity, and there could be instances, other than the following example, when the two « Organizations » belong to the same company/legal entity.
Organization B may for example be a public transport provider, that Organization A wants its employees to use, and to be later charged for by Organization B for such use. The premise of no advance commercial agreement entails that there be no possibility of for example issuing Organization A-dedicated public transportation cards, or of building a trust mechanism that would allow Organization B-devices (card readers, access gates etc.) to recognize Organization A-employee cards.

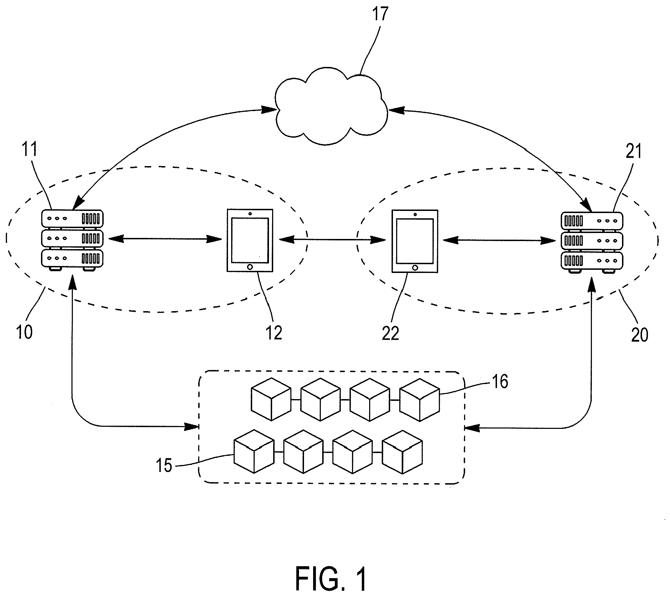

Figure 1 is a representation of two Islands of Trust for two organizations, and of the interaction between two devices respectively belonging to each of the organizations. Island of Trust 10 for Organization A comprises at least a backend 11, to which is connected at least a device 12. Island of Trust 20 for Organization B comprises at least a backend 21, to which is connected at least a device 22. Both backends 11 and 21 may access Cloud 17, as well as payment blockchain 15 and obligation blockchain 16.

In the aforementioned example of Organization B being a public transport provider, that Organization A wants its employees to use, and to be later charged for by Organization B for such use, device 12 will be for example a badge or other mobile device of an employee of Organization A, while device 22 will be for example a badge reader or an electronic access gate, the two devices being able to communicate through known means such as Bluetooth or NFC technologies.
When an Organization A employee approaches device 22 through device 12, the latter is cryptographically identified as a device of Organization A, because Organization B can verify the cryptographic connection between the Organization A device and the public cryptographic keys of Organization A.

Device 12 interacts with device 22. Previously in device 12's Island of Trust, have been downloaded by backend 11 the ToUs of services provided by Organization B. A selection has been made among these services and communicated to device 12 under the form of obligations, that are in turn transmitted by device 12 to device 22. Device 22 polls backend 21 within its own Island of Trust to decide whether the obligations can be accepted (i.e. whether the company the employee belongs to is a trusted one). If so, ToUs are compared and if verified, there is a secondary mutual signature by both devices 12 and 22 to finalize the transaction. The transaction is then written into obligation blockchain 16 to be recorded. At the end of each month (for example), Organization A pays and honors the existing obligations, which may be found in the obligation blockchain 16, while leaving a public record of this payment in payment blockchain 15. If Organization A does not honor its obligations, then there will be a public record of that, and other companies will unlikely accept future obligations from Organization A since its honorability may be questioned.

This allows an employee bearing device 12 to be recognized and to use the selected transport services of Organization B both immediately (little or no latency) and privately (without disclosing the employee's personal information).

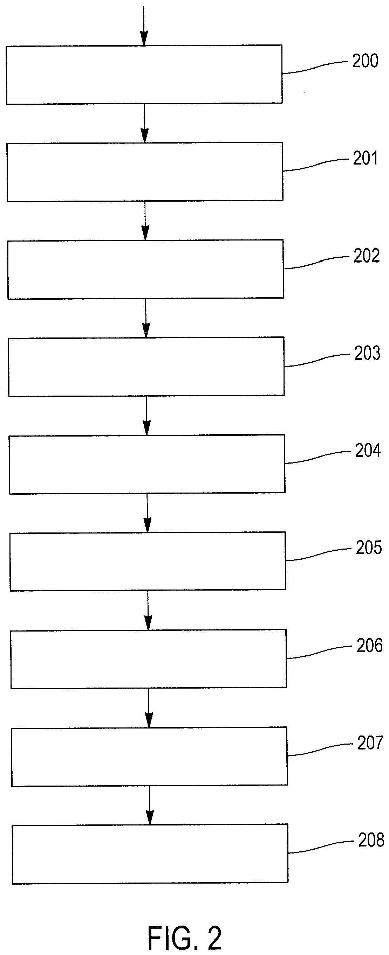

More specifically, Figure 2 is a representation of the steps toward one organization using and paying for, services provided by the other organization, through interaction of respective devices.

At step 200, Organization B creates ToUs for the services it provides, signs them and makes them publicly available to other organizations. This is done through backend 21 signing and uploading such ToUs in Cloud 17. Such ToUs may for example be ride fares, transport subscription fees etc.

At step 201, Organization A accesses ToUs made available by Organization B and selects the services it wants to pay for, for example based on the needs of its employees, such as riding transportation only on worked days, etc. This is done through backend 11 downloading such ToUs from Cloud 17, and selecting terms among the ToUs.

At step 202, Organization A creates and signs "digital vouchers" (named obligations) for its employees based upon selected among Organization B's ToUs dowloaded at step 201. Organization A's agreement thus does not have to take the form of a bilateral agreement with Organization B. This is done through backend 11 creating and signing Obligation Tokens (OTs) transmitted to device 12, and signing and writing selected terms among Organization B's ToUs into device 12.

At step 203, when device 12 approaches device 22, it sends to it both a request for interaction, and the selected terms received from backend 11 at step 202, referring to the exact services of Organization B that Organization A through device 12 is wanting to access.

At step 204, device 22 sends to device 12 the ToUs that organization B created and signed at step 200.

At step 205, when the ToUs received from device 22 at step 204 are the same (as regard the selected services) as the selected terms signed at step 202, the "digital vouchers" of step 202 are sent to Organization B. This is done by device 12 (hence without further involvement of backend 11) both doing the ToU comparison, and signing and sending to device 22 the OTs it received at step 202 from backend 11.

At step 206, device 22 immediately lets device 12 use the selected services requested by Organization A of Organization B, and signs and sends to backend 21 the OTs received at step 205 from device 12.

At step 207, backend 21 writes the OTs into obligation chain 16, thus making them publicly available.

At step 208, when backend 11 notices new OTs into obligation chain 16, Organization A may want to pay for the selected service provided by Organization B ; at this point and before it does, Organization A will ensure that all proper signatures are in place and no OTs have been forged ; this is done by backend 11 verifying all signatures made at steps 200 to 207, and if verified, making this payment public by linking it to payment blockchain 15.

Blockchains 15 and 16 and the interaction between them according to the invention are now described.

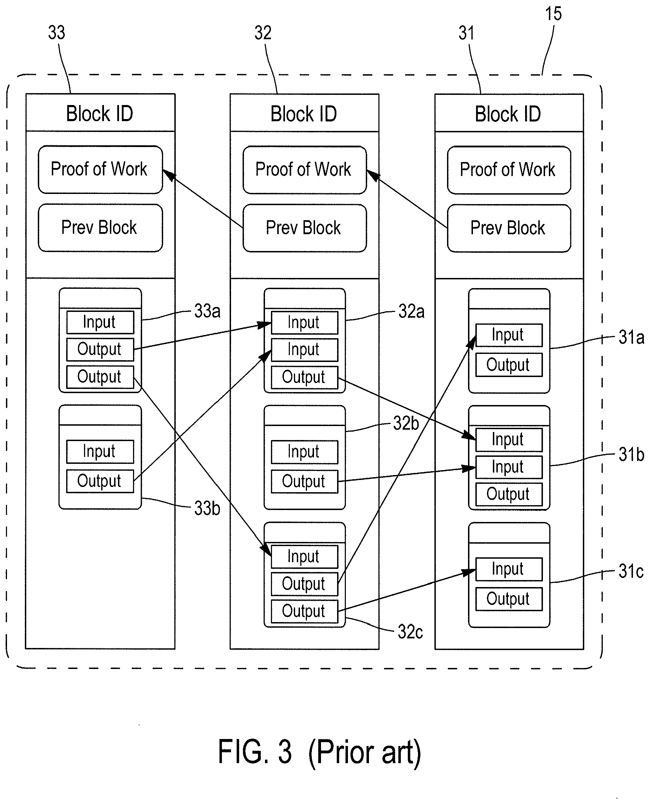

Blockchain 15 is a standard payment blockchain such as Bitcoin. Figure 3 is a representation of a standard payment blockchain (prior art).
Standard payment blockchain 15 is composed of an unlimited number of blocks, of which three are represented as 31, 32, and 33. Each block comprises at least one payment transaction, of which two or three are represented as an example in each block as 3Xa, 3Xb, 32c and 31 c. Each payment transaction comprises a number of Inputs (ie: money received) and Outputs (ie: money spent).
Transactions 3Xx are linked to each other, as a valid output (money spent) must refer to a previous input (money received). This intertransaction relationship allows public verification that the money has been transferred from the payer to the payee, and a debt has been honored.

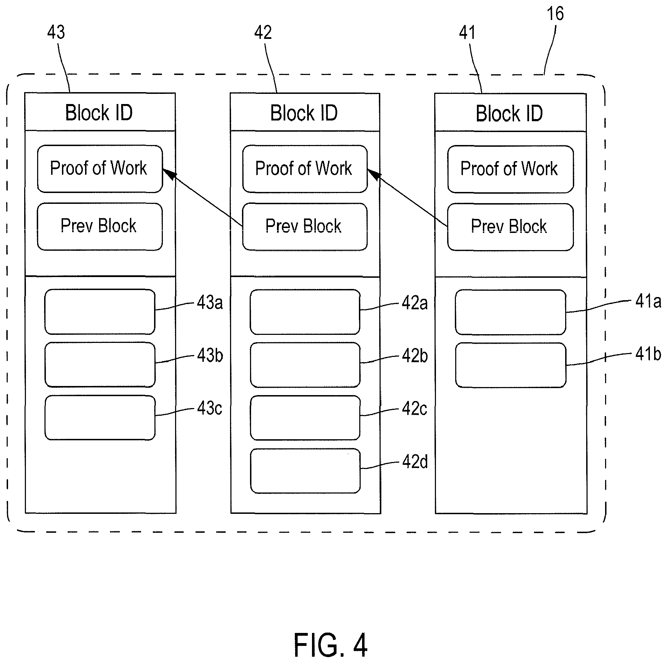

Blockchain 16 is a specific obligation blockchain. Figure 4 is a representation of a specific obligation blockchain according to the invention.
Specific obligation blockchain 16 is composed of an unlimited number of blocks, of which three are represented as 41, 42, and 43. Each block comprises at least one obligation transaction, or which two, three or four are represented in each block as 4Xa, 4Xb, 43c and 42c, and 42d.
As in standard payment blockchain 15, specific obligation blockchain 16 contains blocks 4X which are linked to each other to allow to go back in time up to the first block ever created, the « genesis block ».
Unlike in the standard payment blockchain 15 however, obligation transactions 4Xx are not linked with each other and no dependency is defined among them. Specific obligation blockchain 16 is used as an append only log. The aim is to have a tamper proof and eventually agreed upon set of obligations which are shared among all the peers in the network.
Contrary to payment transactions 3Xx, obligation transactions 4Xx are not validated by the whole network : as an obligation represents an "obligation to pay" it is only the receiver who can take the risk to accept it or not, hence receive, validate and share it with the rest of the network. As such, obligation transactions are not sent in broadcast but are rather exchanged directly between the sender and the receiver. Then, the receiver creates blocks with all newly received obligation transactions and broadcasts them to the network.
Specific obligation blockchain 16 is added and linked to standard payment blockchain 15 as is described hereafter.

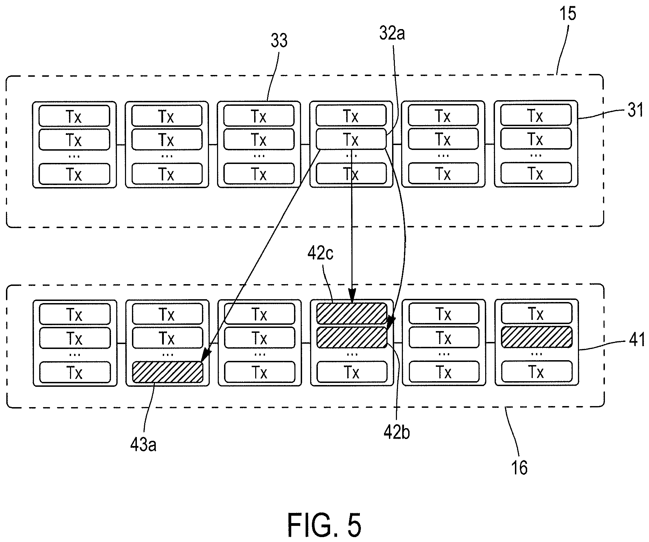

Figure 5 is a representation of links between a specific obligation blockchain and a standard payment blockchain. Each payment transation 3Xx within standard payment blockchain 15 may contain links to one or more obligation transactions 4Xx. Three such links are represented on Figure 5 in relation to payment transaction 32a, respectively to 42c, 42b and 43a, as examples. Once a payment transaction 3Xx has been validated by the network of peers, all the corresponding linked obligation transactions 4Xx are labelled as « settled ». Linking may be through an obligation transaction identification included in the output field of a payment transaction, so as to uniquely point to said obligation transaction.

Once a new obligation block 4X has been added to the specific obligation blockchain 16, each obligation transaction 4Xx in the block is considered « Accepted » and waiting to become « Settled ». Settling an obligation means that a payment, such as a payment transaction, is linked to the obligation transaction thus labelling it as honored.

The invention makes it possible for all devices belonging to a given Island of Trust, to connect with other devices belonging to different Islands of Trust in a secure way by leveraging some ToUs which are claimed and then redeemed on top of an obligation chain. The combined specific obligation blockchain 16 with standard payment blockchain 15 allows devices to commit to the ToUs in a tamper evident distributed manner. This then creates a credibility system on top of the blockchain technology which may be used (i) by the verifier (i.e. the device receiving some request for service) to decide whether to take the risk or not (as it might be the case that the claimant (i.e. the device sending a new request) will not redeem the obligation later on), and (ii) by the service requestor to build some reputation which cannot be deleted/changed by the verifier once the redemption has been completed.

Elements such as the devices and backends could each be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method of interacting a first device (12) in a first Island of Trust (10) belonging to a first organization (A), such Island of Trust comprising at least a first backend (11), with a second device (22) in a second Island of Trust (20) belonging to a second organization (B), such Island of Trust comprising at least a second backend (21), wherein the first and second backends are connected to a cloud (17), and may read/write a payment blockchain (15) and an obligation blockchain (16), said method comprising the steps of:
A- the second backend (21) signing and uploading in the cloud (17) ToUs for services provided by the second organization (B) ;
B- the first backend (11) downloading said ToUs from the cloud (17) ;
C- the first backend (11) selecting terms among ToUs of services required by the first organization (A), creating OTs for said selected terms, and signing and sending to the first device (12) said OTs and said selected terms ;
D- the first device (12) sending to the second device (22) a request for interaction ;
E- the second device (22) sending to the first device (12) said ToUs for services provided by the second organization (B) ;
F- the first device (12) doing a comparison of said selected terms received from the first backend (11) with said ToUs received from the second device (22), and if positive as regard the selected terms, signing and sending to the second device (22) said OTs received from the first backend (11) ;
G- the second device (22) signing and sending the OTs received from the first device (12) to the second backend (21) ; and
H- the second backend (21) writing the OTs received from the second device (22) into the obligation chain (16).

2. The method of claim 1, wherein step D further includes the step of the first device (12) sending to the second device (22) the selected terms received at step C from the first backend (11).

3. The method of claim 1 or 2, wherein step G further includes the step of the second device (22) immediately letting the first device (12) access services provided by the second organization (B) and corresponding to the terms selected at step C.

4. The method of claim 3, further including the step of the first organization (A) paying for services accessed by the first device (12), by the first backend (11) :
- verifying all signatures made at steps A to H; and, if verified
- writing said payment in the payment blockchain (15).

5. A device (12) in a first Island of Trust (10) belonging to a first organization (A), such Island of Trust comprising at least a first backend (11), configured to, when in proximity with a second device (22) in a second Island of Trust (20) belonging to a second organization (B), such Island of Trust comprising at least a second backend (21), wherein the first and second backends are connected to a cloud (17), and may read/write a payment blockchain (15) and an obligation blockchain (16):
- receive from the first backend (11) :
- selected terms for services required by the first organization (A), among ToUs for services provided by the second organization (B) ; and
- OTs for said selected terms ;
- send to the second device (22) a request for
- receive from the second device (22) said ToUs for services provided by the second organization (B) ; and
- do a comparison of said selected terms received from the first backend (11) with said ToUs received from the second device (22), and if positive as regard the selected terms, sign and send to the second device (22) said OTs received from the first backend (11).

6. A device (22) in a first Island of Trust (20) belonging to a first organization (B), such Island of Trust comprising at least a first backend (21), configured to, when in proximity with a second device (12) in a second Island of Trust (10) belonging to a second organization (A), such Island of Trust comprising at least a second backend (11), wherein the first and second backends are connected to a cloud (17), and may read/write a payment blockchain (15) and an obligation blockchain (16) :
- receive a request for interaction from the second device (12) ;
- send to the second device (12) said ToUs for services provided by the first organization (B) ;
- receive OTs for selected among said ToUs from the the second device (12) ; and
- sign and send the OTs received from the second device (12) to the first backend (21).
